# EUROPEAN PATENT APPLICATION

(11) **EP 3 518 063 A1**
(43) Date of publication of application: **31.07.2019**
(21) Application number: 18153404.1
(22) Date of filing: 25.01.2018
(51) Int. Cl.: G05D 1/00, G08G 5/00

(54) **COMBINED VIDEO DISPLAY AND GIMBAL CONTROL**

(71) Applicant: Nokia Technologies Oy, 02610 Espoo (FI)
(72) Inventor: SUVITIE, Arto, 00930 Helsinki (FI)
(74) Representative: Nokia EPO representatives

(57) **Abstract**

An apparatus comprising at least one processing core, at least one memory including a computer program code, the at least one memory and the computer program code being configured to, with the at least one processing core, cause the apparatus at least to control an image acquisition device by an image stabilization device; display an image acquired by the image acquisition device; and control a coordinate system layer overlaid at least partly over a display by controlling at least one control setting of the image stabilization device, thereby causing a change of the at least one control setting of the image stabilization device by an input in a target area of the display and indicating a position of the input received in the coordinating system layer.

## Description

### Field

The present application relates to apparatus and methods for gimbal control and, more particularly, but is not limited to, apparatus and methods for combined video display and gimbal control for gimbal mounted imaging and capture devices providing a video stream while the gimbal is adjusted by a ground control system.

### Background

Capturing images and recording videos is usually prone to blurring if a still or video camera is mounted to and carried by an unsteady and/or moving object passing unwanted movement into the camera while the camera is in operation. Conventionally, such unwanted camera movement is counteracted using image stabilization (IS). In particular with video cameras, camera shake causes visible frame-to-frame jitter in the recorded video.

Image stabilization is a family of techniques that reduce blurring associated with the motion of a camera or other imaging device during exposure. Generally, it compensates at least for pan and tilt (angular movement, equivalent to yaw and pitch) of the imaging device.

As one image stabilization technique, gimbals are combined with cameras and mounted to moving objects. A gimbal is generally a pivoted support in the form of a Cardan suspension that allows the rotation of an object about a single axis. A set of three gimbals, one mounted on the other with orthogonal pivot axes, may be used to allow an object mounted on the innermost gimbal to remain independent of the rotation of its support. Such 3-axis (yaw, roll and pitch) gimbals are used in stabilization systems designed to allow for shooting and/or recording without camera vibration or shake. Motor powered gimbals are able to keep the camera level on all axes as the camera is moved.

Not limited to handheld shooting, gimbals can be mounted to cars and other vehicles such as drones, where vibrations or other unexpected movements would make other camera mounts unacceptable.

While an inertial measurement unit (IMU), which is a kind of combination controller containing both accelerometer(s) and gyro(s) which together are arranged to help in orientation, navigation, stabilization and so on, responds to movement and utilizes three separate and independently driven motors to stabilize the camera, a ground control system (GCS) may be additionally provided in order to allow a user to remotely and actively control the motors so as to purposefully aim the gimbal and, thus, the camera at a desired part of a scene.

However, in a conventional ground control system, a camera video display is provided separately from the gimbal controls (e.g., joysticks). Controlling the gimbal in order to aim the camera at a particular part of a scene is therefore cumbersome when the ground control system provides the controls for adjusting the gimbal while a video stream from the imaging device is displayed in a separate window. In other words, separately providing controls and a display makes it inconvenient to properly aim the camera while observing the video stream.

Thus, there is a need to develop solutions which enhance the usability of a ground control system including a video display and gimbal controls for gimbal mounted capture devices providing a video stream, while the gimbal is adjusted by the gimbal controls.

### Summary

There is provided, according to a first aspect, an apparatus comprising at least one processing core, at least one memory including a computer program code, the at least one memory and the computer program code being configured to, with the at least one processing core, cause the apparatus at least to control an image acquisition device by an image stabilization device; display an image acquired by the image acquisition device; and control a coordinate system layer overlaid at least partly over a display by at least one control setting of the image stabilization device, thereby causing a change of the at least one control setting of the image stabilization device by an input in a target area of the display and indicating a position of the input received in the coordinating system layer.

At least one dimension of the at least one control setting of the image stabilization device may comprise an angle control of a current orientation and/or a field of view of the image acquisition device. Thereby, it may easy to find what the limits of the control settings are.

The input on the coordinate system layer overlaid over the display may be arranged to indicate a relationship to one or more extreme positions of at least one dimension.

The coordinate system layer overlaid over the display may be transparent. Thereby, the view on the screen of the display may be less cluttered.

The input on the coordinate system layer overlaid over the display may be arranged to indicate a portion of at least one maximum angle of the image stabilization device. Thereby, the portion of maximum angle to be displayed is easy to detect on the screen of the display.

The coordinate system layer overlaid over the display may be smaller in length and width than an area of a screen of the display. Thereby, it may allow to touch only the display.

The apparatus may be configured to keep visible the at least one dimension of the at least one control setting of the image stabilization device until a next input in a next target area, a next dimension being in turn visible. Thereby, it may be used for recording/storing purposes.

The apparatus may be configured to change the current orientation and/or the field of view, and configured to zoom a level of the at least one control settings of the image stabilization device. Thereby, a broad range of measurable settings may be used to easily find the name and the level of the control settings of the image stabilization device.

An indication about the input target area may be visible on the display and/or shown in respective edges of the display. Thereby, small indications may provide a large amount of information.

The input target area may cause a vehicle under control of the apparatus to change its orientation when the input target area is outside an area of the display by being set in extreme dimensions of the image stabilization device. Thereby, a change in the planned route or mission for the vehicle under control may be activated.

The image acquisition device may be configured to comprise at least one camera for capturing images and/or videos of an image scene.

The image stabilization device may be configured to comprise a gimbal forming a 3-axis camera stabilization and anti-vibration device and a camera holder adjustable in at least one of directions of up/down, left/right and forward/backward, and configured to comprise a predetermined number of brushless motors for driving movable gimbal parts to move in at least one of said directions.

According to a second aspect, there is provided a method comprising the step of controlling an image acquisition device by an image stabilization device; the step of displaying an image acquired by the image acquisition device; and the step of controlling a coordinate system layer overlaid at least partly over a display by at least one control setting of the image stabilization device, thereby causing a change of the at least one control setting of the image stabilization device by an input in a target area of the display and indicating a position of the input received in the coordinating system layer.

The method may further comprise keeping visible the at least one dimension of the at least one control setting of the image stabilization device until a next input in a next target area, a next dimension being in turn visible. Thereby, it may be used for recording/storing purposes.

The method may further comprise changing the current orientation and/or the field of view, and zooming a level of the at least one control settings of the image stabilization device. Thereby, a broad range of measurable settings may be used to easily find the name and the level of the control settings of the image stabilization device.

According to a third aspect, there is provided an apparatus comprising means for performing the actions of the method as described above.

According to a fourth aspect, there is provided an image stabilization device as specified in the first aspect.

According to a fifth aspect, there is provided a camera as specified in the first aspect.

According to a sixth aspect, there is provided a computer program product comprising program instructions for causing a computer to perform the method as described above.

The computer program product may be stored on a medium and may cause an apparatus to perform the method as described herein.

An electronic device may comprise the apparatus as described herein.

A chipset may comprise the apparatus as described herein.

Embodiments of the present application aim to address problems associated with the state of the art.

### Summary of the Figures

For a better understanding of the present application, reference will now be made by way of example to the accompanying drawings in which:
Figure 1 shows schematically an example of an unmanned aerial vehicle system 100 including a device providing combined video display and gimbal control, according to some embodiments;
Figure 2 shows schematically an illustration of a functional user interface of the device 10 providing combined video display and gimbal control, according to some embodiments; and
Figures 3A and 3B illustrate schematically an effect of a gimbal movement as observable on a video display of the device providing combined video display and gimbal control, according to some embodiments.

### Embodiments of the Application

The following describes in further detail suitable apparatus and possible mechanisms for the provision of an effective ground control system using combined video display and gimbal control.

It is assumed herein that the term "gimbal" is meant to describe any adjustable camera holder designed to keep the device level. As such and particularly suitable for use with drones, the gimbal is a 3-axis camera stabilization and anti-vibration device, for example, a 3-axis brushless (motor) camera gimbal, arranged to keep the camera level on all axes as the camera is moved. 3-axis herein means that the camera is adjustable in at least directions of up/down, left/right and forward/backward. In other words, in this example, the camera is located on a gimbal which may actuate to change the orientation of the camera.

In addition, the gimbal (and at least as far as the camera is mounted thereto, also the camera and the camera's view field and/or view line) is controllable by a ground control system (GCS) arranged to actively control the motors so as to purposefully direct the camera's view field and/or view line to a desired part of a scene or to an object present therein. By purposefully directing the camera's view field and/or view line, the gimbal is enabled to aim at a dynamic point, e.g., a continuous function of coordinates, given motion constraints such as maximal possible velocities, accelerations and angles amongst others.

In the following exemplary embodiments, a ground control system including combined video display and gimbal control for unmanned aerial vehicles is described. However, it would be appreciated that, in some embodiments, the apparatus may be part of any suitable electronic device or apparatus configured to effectively combine video display and gimbal control.

A conventional approach to gimbal control would be for a professional user to have a video display on which a captured video stream is displayed, and separate thereto gimbal controls in the form of, e.g., up/down and left/right buttons or a joystick arrangement providing such functionality so that the user can confirm effects and results of a performed control action while observing the video stream.

In the field of unmanned aerial vehicles (UAV) and unmanned aerial systems (UAS), there is also known a screen target designator where the user can touch or click a touch layer in front of a screen to designate a target area that is shown on the screen. After doing so, a gimbal locks onto the target area and an unmanned aerial vehicle will autonomously track and follow the target area or proceed to fly to the location that the user touched or clicked, and will also point the gimbaled camera at that location. The concept as described herein may be considered to be an enhancement to conventional ground control systems, wherein a gimbal control window on a gimbal control device, which may include a touchscreen device, shows images and/or video streamed from the camera mounted to the gimbal, and wherein the images or video are interactively overlaid with an invisible coordinate system layer (also referred to hereafter as coordinate system) or grid that allows a user to directly recognize a current gimbal orientation and to which extent the gimbal can be moved in any direction.

With this configuration, the gimbal can be immediately commanded to move to any possible orientation with a single and, within the coordinate grid, freely placeable click or touch of the user, while the video footage displayed behind the overlaid gimbal control grid immediately assists in providing the user with a real-time feedback of the current gimbal location, which is advantageously quicker and easier compared to conventional joystick-like or joystick emulating button gimbal controls.

In other words, the concept as described herein features gimbal controls created as an interactive overlay on top of an image and/or video display. The particular exemplary configuration is such that clicking on or touching the video display surface will conveniently set a new gimbal angle, wherein an X-coordinate at least determines a new yaw angle and a Y-coordinate determines at least a new pitch angle.

The concept as described herein may further include a configuration in which indicators are arranged at the sides of the video display window and indicate a current gimbal angle, thereby advantageously avoiding any obscuring of the displayed image or video footage. In this configuration, a set gimbal angle may be kept and maintained until a next click or touch on the video display surface is detected in any other area of the screen.

In addition, the concept as described herein may be configured such that the overlaid (X, Y) coordinate system or grid is smaller than the video display screen by a predetermined margin at at least one of the edges of the screen in order to suitably arrange for free display space for video only view control.

The concept as described with respect to the exemplary embodiments herein makes it possible to immediately instruct a gimbal to move into a desired direction and to thereby correspondingly change the pointing of a gimbaled camera while observing the instructed movements in real-time on a video footage display underlying the transparently provided gimbal control input area.

The concept may, for example, be embodied as a clickable and/or touch screen device capable of receiving and displaying a video stream from a gimbaled camera and being overlaid with an invisible, i.e., transparently arranged, coordinate system or grid. The video stream may be received wirelessly, and the user input may be transferred wirelessly to a controlled gimbal and/or a controlled camera.

For example, depending on available bandwidth, processing and/or storage capacity and resolution, the video signals could be encoded, stored, and transmitted in a MPEG-4, H.264 or even H.265/HEVC video format, as developed by the ITU-T Video Coding Experts Group (VCEG) together with the ISO/IEC Moving Picture Experts Group (MPEG).

Thereby, the concept may provide for combined video display and gimbal control.

It is believed that the main benefits of the present application may include 1-click and so to say immediate and facilitated gimbal orientation change commandment assisted by real-time feedback of the current gimbal orientation and at the same time video view controllability combined into only one apparatus and/or device, which may provide a user with an enhanced controllability of both image acquisition using a gimbaled camera and gimbal orientation.

Although capture, gimbal and gimbal carrying systems may be separate, it is understood that they may be implemented with the same apparatus or may be distributed over a series of physically separate but communication capable apparatus. For example, an image acquisition device such as the camera might be integrated into a gimbal to be mounted at an unmanned aerial vehicle, i.e., provided as an integrally formed gimbal camera, and equipped with an additional interface for unmanned aerial vehicle control via the video display.

Furthermore, it is understood that at least some elements of the image data acquisition may be implemented within a distributed computing system such as known as the "cloud".

Also, it is understood that "image" and "video" as used herein may refer to both still and motion images, and may as such be equivalently used and interchanged, as an application dependent case may require.

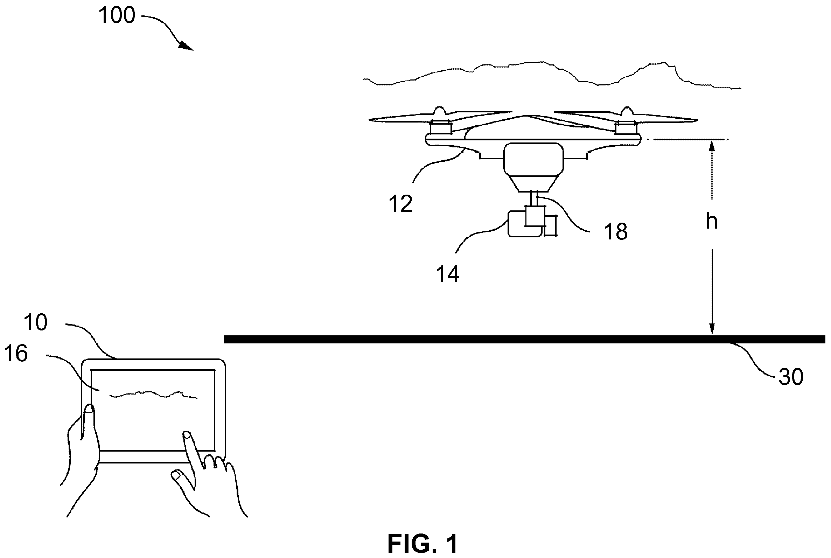

With respect to Figure 1, is schematically shown an example of a controllable unmanned aerial vehicle system 100 according to some embodiments.

Acquisition, tracking and pointing hardware and software for the unmanned aerial vehicle system 100 as well as optical, physical and information interfaces between each of components other than the concept described herein may as such be known and will therefore not be described in particular detail. Acquisition, tracking and pointing hardware and software as mentioned above may, for example, include a predetermined-meter elevation over azimuth gimbal and gimbal control system with a predetermined number of acquisition sensors, a dome controller, coarse and fine track systems, a mode logic control system and the like, as well as GPS functionality to gather satellite data in order to determine the position of the vehicle, barometer functionality to measure pressure in the air in order to determine the vehicle altitude above the ground, sonar sensors and a bottom facing camera combining to help know where the ground or floor is when the vehicle is within a lower height, usually up to a couple of meters, above the ground (this system is helpful for indoor flight when no GPS is available), accelerometers inside the vehicle for sensing whether it is moving through the air, and a gyroscope helping keep the vehicle body level during flight.

The unmanned aerial vehicle system 100 may further comprise a flight controller (F/C), which in its broadest sense may form a central computer of the vehicle equipped and/or supported by RAM, ROM, I/O and the like, and may be mounted to a system circuit board along with an inertial measurement unit (IMU), a radio receiver and transmitter for communicating with a transmitter and a smart device back on the ground. Finally, a power source such as a battery and electronic speed controllers may be provided for providing power to vehicle motors. However, these are exemplary implementations only and it is understood that the device 10 may be used in any suitable configuration scenario.

Assuming a basic and general configuration comprising at least some of elements mentioned above as necessary for a particular application, Figure 1 shows schematically an exemplary unmanned aerial vehicle system 100 including a device 10 providing combined video display and gimbal control, according to some embodiments. As also shown in Figure 1, the device 10 may be used for remote control of an unmanned aerial vehicle 12 such as a drone or the like. However, this is an exemplary implementation only and it is understood that the device 10 may be used in any suitable image acquisition scenario.

As shown in Figure 1, the unmanned aerial vehicle 12 is flying in a predetermined height h over ground 30 while being controlled using the device 10. The device 10 may, for example, be a handheld device, a laptop computer, a fixedly installed clickable or a touchable screen at a more remote location or the like. The gimbaled camera 14 on the unmanned aerial vehicle 12 may capture an image sequence or a video stream when activated and may transfer the image sequence or video stream to a video display 16 at the device 10. Supposing that processing and transfer delays are negligible for the purposes herein, it can be said that a user observing the video display 16 sees in essentially real-time what the camera 14 sees and captures.

As also schematically indicated in Figure 1, the user may control at least parts of the unmanned aerial vehicle 12 via the device 10. For example, the user may control the camera 14, a gimbal 18 accommodating or integrating the camera 14, electronics and the drive system such as motors of the unmanned aerial vehicle 12, or predetermined combinations thereof. Controllability may generally comprise directional changes, height changes, speed changes, orientation changes, on/off-operations, sound operations and the like as functionally provided and applicable to a specific controllable element or component.

For example, controllability may comprise camera and/or gimbal orientation control by correspondingly inputting clicking or touch operations to the screen of the device 10.

In order to allow for respectively dedicated control, the present embodiment of the device 10 may employ a scheme of overlaying a coordinate system or grid over the video frame display 16 such that, for example, the gimbal 18 is controllable by input assignable to (i.e., detectable via) the coordinate system and such that, for example, the camera 14 is controllable by input assignable to (i.e., detectable via) the video display 16.

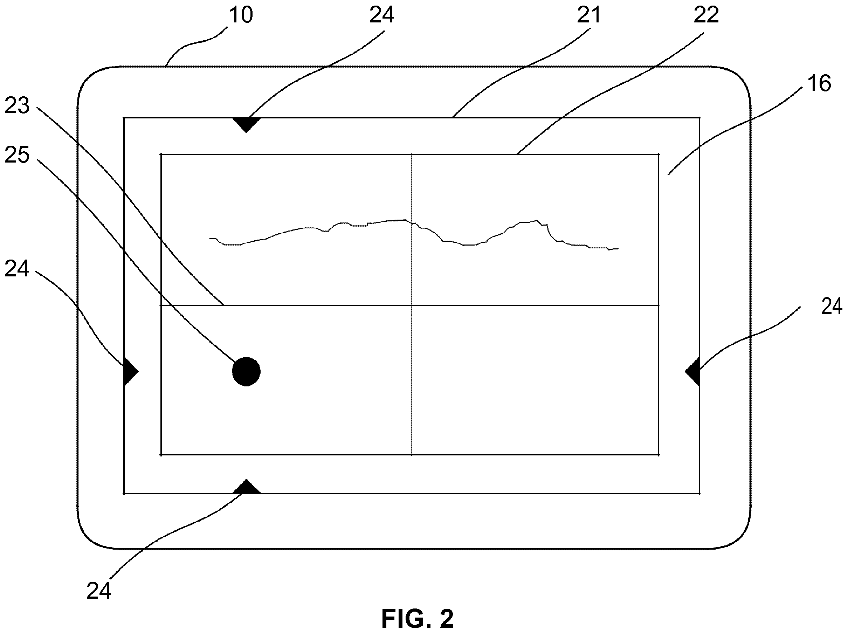

Figure 2 shows schematically an illustration of a functional user interface (UI) of the device 10, according to some embodiments.

As shown in Figure 2, an outer frame 21 may define an area in which footage from the camera 14 is displayed as a video stream as the video display 16. An inner frame 22, shown by dashed lines, may form a region in which the coordinate system or grid is overlaid over the video display 16.

As depicted in Figure 2, the inner frame 22 may cover an area smaller than the outer frame 21, i.e., may leave an outer margin of the video display 16 uncovered. While Figure 2 shows the outer frame 21 and the inner frame 22 to be symmetrically centred, it is understood that the inner frame 22 may be displaced and off-centred to either edge of the outer frame 21 so as to respectively increase uncovered video display area and to thereby provide more and/or optimized space for providing and arranging, e.g., vehicle and/or camera control elements (not shown).

As also shown in Figure 2, a coordinate system 23, or grid 23, may extend within the inner frame 22 only, i.e., may be not provided in the outer frame 21 margin area. In the present embodiment, the coordinate system 23 may be an X-Y-coordinate system, without however being limited thereto. Any other coordinate representation may be used as required by or suitable for a particular application. In an exemplary embodiment, the coordinate system 23 may be provided in a transparent manner so as to be invisible to the user.

The inner frame 21 being provided with the coordinate system 23 and overlaid on top of the video display 16 may define the area within which gimbal 18 control is possible. In this exemplary configuration, gimbal controls may be arranged as an interactive overlay. That is, positions of clicks or touches of the user on the surface of the video display 16 may be detected as (X, Y) coordinate values in the overlaid coordinate system 23 and configured to directly set a new gimbal 18 angle with respect to at least yaw and pitch. Under an assumption that roll (the roll axis of the gimbal 18) is generally not to be considered for video footage purposes, for example, the X-coordinate value may determine a new gimbal 18 yaw angle, and the Y-coordinate determines a new gimbal 18 pitch angle.

In the example shown in Figure 2, edge position indicators 24 of the current gimbal orientation may be arranged to be displayed in the video display 16 margin region outside the inner frame 22. In an exemplary embodiment, these edge position indicators 24 may be small indicator elements such as arrows or triangles at the sides of the video window so as to avoid obscuring the video footage, and may be visibly coloured and/or opaque. An intersection position indicator 25, for example in the form of an as well visibly coloured and/or opaque circle, may be configured to be displayed at the intersection point of imaginary lines connecting two respectively opposite edge position indicators 24, showing the location in the image the gimbal 18 points to.

In the present exemplary embodiment, a preferred configuration may be such that a gimbal 18 angle, once set is kept and maintained until a next or subsequent click or touch, is detected in any other area covered by the inner frame 22 overlaying the coordinate system 23 on top of the video display 16, immediately commanding the gimbal 18 to move to the newly designated orientation. The user may then receive a real-time feedback of the current gimbal 18 orientation and observe the effect of the gimbal 18 movement on the video display 16.

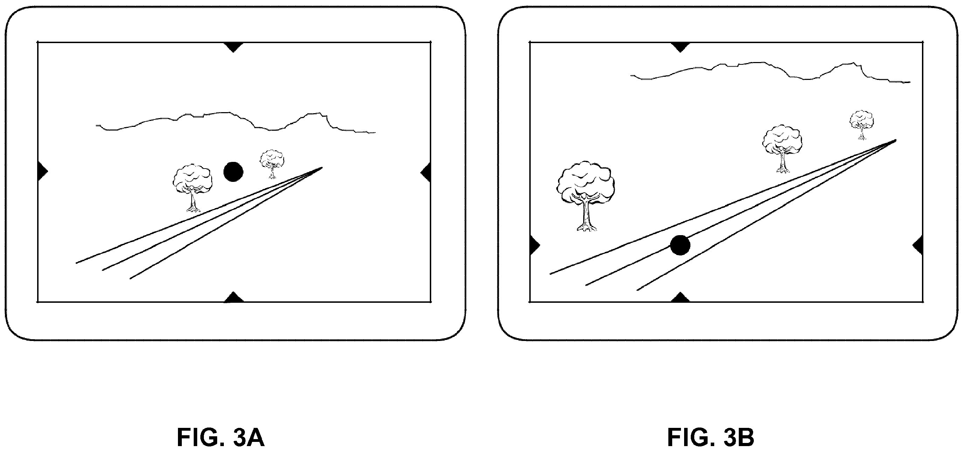

Figures 3A and 3B schematically illustrate the effect of the gimbal 18 movement as observable on the video display 16, according to some embodiments.

For example, Figure 3A shows (for a supposedly stationary unmanned aerial vehicle 12) the gimbal 18 in a default position of 50% horizontal and 50% vertical with respect to the video display 16. When the user clicks on or touches the video surface to define a new target area for the gimbal 18, for example, a point on the video surface indicated by the off-centred circle indicator, for example, 80% horizontal and 40% vertical with respect to the video display 16, the controllable orientation point (X, Y) may then determine to be the intersection between the lines imaginarily connecting the edge position indicators. The gimbal 18 will immediately reorient itself to this new position, thereby actuating the camera 14 to the new target area, which allows to reorient also the camera 14. The reorientation of the camera 14 may be as the real-time feedback observable by the user as a corresponding image shift on the video display 16.

Compared to known arrangements relying on, for example, click or touch point detection via a general purpose device and associating a detected click or touch point to coordinates extracted from image data, it is believed that a main effect advantageously achieved by the concept and configurations described herein resides in lowering a computational load on the control system and improving a system response and behaviour due to immediate and direct detectability of a user command using the overlaid coordinate system 23.

Compared to known arrangements relying on, for example, separately provided gimbal control and display components, the inconvenience in controlling the camera while observing the video stream may be advantageously eliminated.

The concept which is shown in the embodiments and examples is to enable the control (either by a user to provide a manual input or a processor to implement an automatic or semi-automatic control) of the controllable orientations of the gimbal 18 and/or the camera 14. In some further exemplary embodiments, the user may be provided a user interface control element in the form of a button or slider, for example, to adjust a parameter which is related to adjusting a controllable position/orientation for the gimbal 18 and/or the camera 14.

It shall be noted that the examples and method described herein do not change the video capturing and video rendering functionality, but may be implemented as an assistive module for improved controllability.

The device 10 may be any suitable electronics device or apparatus. For example, in some exemplary embodiments, the device 10 may be a mobile device, user equipment, tablet computer, computer and video playback apparatus amongst others.

In some exemplary embodiments, the device 10/the system 100 may comprise at least one processor or central processing unit. The processor may be configured to execute various program codes. The implemented program codes may comprise, for example, gimbal position control, camera control, position determination and tracking and other code routines such as described herein.

In some exemplary embodiments, the device 10/the system 100 may comprise a memory. In some exemplary embodiments, the at least one processor may be coupled to the memory. The memory may be any suitable storage means. In some exemplary embodiments, the memory may comprise a program code section for storing program codes implementable upon the processor. Furthermore, in some exemplary embodiments, the memory may further comprise a stored data section for storing data, for example, data that has been processed or to be processed in accordance with the embodiments as described herein. The implemented program code stored within the program code section and the data stored within the stored data section may be retrieved by the processor whenever needed via the memory-processor coupling.

In some exemplary embodiments, the device 10 may comprise a user interface. The user interface may be coupled in some exemplary embodiments to the processor. In some exemplary embodiments, the processor may control the operation of the user interface and receive inputs from the user interface. In some exemplary embodiments, the user interface may enable a user to input commands to the device 10, for example, via a keypad, buttons or the coordinate system 23. In some exemplary embodiments, the user interface may enable the user to obtain information from the device 10. For example, the user interface may comprise a display configured to display information from the device 10 to the user. The user interface may, in some exemplary embodiments, comprise a touch screen or touch interface capable of both enabling information to be entered to the device 10 and further displaying information to the user of the device 10. In some exemplary embodiments, the user interface may be the user interface for communicating with the unmanned aerial vehicle system as described herein.

In some exemplary embodiments, the device 10 may comprise a transceiver. The transceiver in such embodiments may be coupled to the processor and configured to enable a communication with other apparatuses or electronic devices, for example, via a wireless communications network. The transceiver or any suitable transceiver or transmitter and/or receiver means may, in some exemplary embodiments, be configured to communicate with other electronic devices or apparatuses via a wire or wired coupling.

The transceiver may communicate with further apparatuses by any suitable known communications protocol. For example, the transceiver or transceiver means may use a suitable universal mobile telecommunications system (UMTS) protocol, a wireless local area network (WLAN) protocol such as for example IEEE 802.X, a suitable short-range radio frequency communication protocol such as Bluetooth and infrared data communication pathway (IRDA) amongst others.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the application is not limited thereto. While various aspects of the application may be illustrated and described as block diagrams, flow charts, or using some other pictorial representation, it is well understood that these blocks, apparatuses, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the mobile device, such as in the processor entity, or by hardware, or by a combination of software and hardware. Further, in this regard, it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk and floppy disks, and optical media such as, for example, digital video disc (DVDs) and the data variants thereof, compact disc (CDs).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

## Claims

1. An apparatus comprising at least one processing core, at least one memory including a computer program code, the at least one memory and the computer program code being configured to, with the at least one processing core, cause the apparatus at least to:
control an image acquisition device by an image stabilization device;
display an image acquired by the image acquisition device; and
control a coordinate system layer overlaid at least partly over a display by at least one control setting of the image stabilization device, thereby causing a change of the at least one control setting of the image stabilization device by an input in a target area of the display and indicating a position of the input received in the coordinating system layer.

2. The apparatus according to claim 1, wherein at least one dimension of the at least one control setting of the image stabilization device comprises an angle control of a current orientation and/or a field of view of the image acquisition device.

3. The apparatus according to claim 1 or 2, wherein the input on the coordinate system layer overlaid over the display is arranged to indicate a relationship to one or more extreme positions of at least one dimension.

4. The apparatus according to any one of claims 1 to 3, wherein the coordinate system layer overlaid over the display is transparent.

5. The apparatus according to any one of claims 1 to 4, wherein the input on the coordinate system layer overlaid over the display is arranged to indicate a portion of at least one maximum angle of the image stabilization device.

6. The apparatus according to any one of claims 1 to 5, wherein the coordinate system layer overlaid over the display is smaller in length and width than an area of a screen of the display.

7. The apparatus according to claim 2 or 3, wherein the apparatus is configured to keep visible the at least one dimension of the at least one control setting of the image stabilization device until a next input in a next target area, a next dimension being in turn visible.

8. The apparatus according to any one of claims 2 to 7, wherein the apparatus is configured to change the current orientation and/or the field of view, and configured to zoom a level of the at least one control settings of the image stabilization device.

9. The apparatus according to any one of claims 1 to 8, wherein an indication about the input target area is visible on the display and/or shown in respective edges of the display.

10. The apparatus according to any one of claims 1 to 9, wherein the input target area causes a vehicle under control of the apparatus to change its orientation when the input target area is outside an area of the display by being set in extreme dimensions of the image stabilization device.

11. A method comprising:
controlling an image acquisition device by an image stabilization device;
displaying an image acquired by the image acquisition device; and
controlling a coordinate system layer overlaid at least partly over a display by at least one control setting of the image stabilization device, thereby causing a change of the at least one control setting of the image stabilization device by an input in a target area of the display and indicating a position of the input received in the coordinating system layer.

12. The method of claim 11 comprising keeping visible the at least one dimension of the at least one control setting of the image stabilization device until a next input in a next target area, a next dimension being in turn visible.

13. The method of claim 11 or 12 comprising changing the current orientation and/or the field of view, and zooming a level of the at least one control settings of the image stabilization device.

14. An apparatus comprising means for performing a method according to any one of claims 11 to 13.

15. A computer program product comprising program instructions for causing a computer to perform a method according to any one of claims 11 to 13.
